# EUROPÄISCHE PATENTANMELDUNG

(11) **EP 4 596 364 A1**
(43) Veröffentlichungstag der Anmeldung: **06.08.2025**
(21) Anmeldenummer: 24214797.3
(22) Anmeldetag: 22.11.2024
(51) Int. Cl.: B61C 17/02, B61K 11/00, B61L 15/00, B61L 27/57, B60S 1/48, G01F 23/00

(54) **LANDSEITIGE VIRTUELLE WISCHWASSERFÜLLSTANDSANZEIGE**

(30) Priorität: 31.01.2024 DE 102024200908
(71) Anmelder: Siemens Mobility GmbH, 81739 München (DE)
(72) Erfinder: De Rosa, Antonio, 96117 Lichteneiche (DE); Fiege, Norman, 36043 Fulda (DE); Kleiboehmer, Marc, 90419 Nürnberg (DE); Rüdt, Ulrich, 73760 Ostfildern-Nellingen (DE)
(74) Vertreter: Siemens Patent Attorneys

(57) **Zusammenfassung**

Es wird eine Wischwasserfüllstandsüberwachungseinrichtung (30) für ein Schienenfahrzeug beschrieben. Die Wischwasserfüllstandsüberwachungseinrichtung (30) weist einen fahrzeugseitigen Füllstandssensor (1a, 1b) auf, welcher an oder in einem Wischwasserbehälter (1) des Schienenfahrzeugs angeordnet ist, zum Erfassen von Sensordaten (SD). Teil der Wischwasserfüllstandsüberwachungseinrichtung (30) ist auch eine Datenausleseeinheit (32) zum Auslesen der Sensordaten (SD). Die Wischwasserfüllstandsüberwachungseinrichtung (30) umfasst auch eine Datenübertragungseinheit (33) zum drahtlosen Übertragen der Sensordaten (SD) an eine landseitige Datenempfangseinrichtung. Es wird auch ein Schienenfahrzeug beschrieben. Weiterhin wird eine landseitige Wischwasserfüllstandsanzeigeeinrichtung (40) beschrieben. Zudem wird ein System (50) zur Simulation einer landseitigen virtuellen Füllstandsanzeige (FSD) eines Schienenfahrzeugs beschrieben. Ferner wird ein Verfahren zum Detektieren und Übermitteln eines Füllstands eines Wischwasserbehälters (1) eines Schienenfahrzeugs beschrieben. Es wird auch ein Verfahren zum Generieren einer virtuellen Füllstandsanzeige beschrieben. Außerdem wird ein Verfahren zum Überwachen eines Füllstands eines Wischwasserbehälters (1) eines Schienenfahrzeugs beschrieben.

## Beschreibung

Die Erfindung betrifft eine Wischwasserfüllstandsüberwachungseinrichtung. Die Erfindung betrifft auch ein Schienenfahrzeug mit einer solchen Wischwasserfüllstandsüberwachungseinrichtung. Weiterhin betrifft die Erfindung eine landseitige Füllstandsanzeigeeinrichtung. Überdies betrifft die Erfindung ein System zur Simulation einer landseitigen virtuellen Füllstandsanzeige eines Schienenfahrzeugs. Die Erfindung bezieht sich auch auf ein Verfahren zum Detektieren und Übermitteln eines Füllstands eines Wischwasserbehälters eines Schienenfahrzeugs. Außerdem betrifft die Erfindung ein Verfahren zum Generieren einer virtuellen Füllstandsanzeige und ein Verfahren zum Überwachen eines Füllstands eines Wischwasserbehälters eines Schienenfahrzeugs.

Schienenfahrzeuge weisen Wischwasserbehälter auf, welche meist unter dem Führerpult angeordnet sind. Um den Füllstand eines Wischwasserbehälters ermitteln zu können, muss eine Person eine Skala auf dem Wischwasserbehälter ablesen, um zu erkennen, wie viel Wischwasser sich noch im Wischwasserbehälter befindet. Wenn sich zu wenig Wischwasser im Wischwasserbehälter befindet, muss Wischwasser nachgefüllt werden. Eine Bewertung, ob zu wenig Wischwasser im Behälter vorhanden ist, muss von einer menschlichen Person, insbesondere einem Fahrzeugführer oder Wartungspersonal, durchgeführt werden. Der Füllstand ist oft sehr unklar zu erkennen, da bei schlechten Lichtverhältnissen die Transparenz eines Wischwasserbehälters, welcher in der Regel aus Plastik besteht, nicht immer ausreichend ist.

Es besteht also die Aufgabe, eine Vorrichtung und ein Verfahren bereitzustellen, mit denen ein Füllstand eines Wischwasserbehälters, insbesondere eines Schienenfahrzeugs, einfacher und zuverlässiger überwacht werden kann.

Diese Aufgabe wird durch eine Wischwasserfüllstandsüberwachungseinrichtung gemäß Patentanspruch 1, ein Schienenfahrzeug gemäß Patentanspruch 5, eine landseitige Wischwasserfüllstandsanzeigeeinrichtung gemäß Patentanspruch 6, ein System zur Simulation einer landseitigen virtuellen Füllstandsanzeige eines Schienenfahrzeugs gemäß Patentanspruch 7, ein Verfahren zum Detektieren und Übermitteln eines Füllstands eines Wischwasserbehälters eines Schienenfahrzeugs gemäß Patentanspruch 8, ein Verfahren zum Generieren einer virtuellen Füllstandsanzeige gemäß Patentanspruch 9 und ein Verfahren zum Überwachen eines Füllstands eines Wischwasserbehälters eines Schienenfahrzeugs gemäß Patentanspruch 10 gelöst.

Die erfindungsgemäße Wischwasserfüllstandsüberwachungseinrichtung für ein Schienenfahrzeug weist einen fahrzeugseitigen Füllstandssensor auf, welcher vorzugsweise im Inneren eines Wischwasserbehälters des Schienenfahrzeugs angeordnet ist, zum Erfassen von Sensordaten, auf deren Basis ein Füllstand des Wischwasserbehälters ermittelbar ist. Der Füllstandssensor kann auch außen am Wischwasserbehälter angeordnet sein.

Die erfindungsgemäße Wischwasserfüllstandsüberwachungseinrichtung weist auch eine Datenausleseeinheit zum Auslesen der Sensordaten auf. Die Datenausleseeinheit dient dem Auslesen der Sensordaten aus dem Füllstandssensor und der Übertragung der erfassten Sensordaten innerhalb des Schienenfahrzeugs.

Die erfindungsgemäße Wischwasserfüllstandsüberwachungseinrichtung weist eine Datenübertragungseinheit zum drahtlosen Übertragen der Sensordaten an eine landseitige Datenempfangseinrichtung auf. Die Datenübertragungseinheit ist dazu eingerichtet die von dem Füllstandssensor erfassten Sensordaten an eine landseitige Empfangseinrichtung drahtlos zu übermitteln.

Vorteilhaft kann der Füllstand der Wischwasserbehälter eines Schienenfahrzeugs kontinuierlich überwacht werden. Insbesondere kann durch die ständige Überwachung eine unnötige Zuführung des Schienenfahrzeugs in die Werkstatt zum erneuten Befüllen der Wischwasserbehälter verhindert werden. Andererseits kann ein Leerlaufen der Wischwasserbehälter und damit ein Versagen einer Scheibenwischanlage ebenfalls verhindert werden, da die Füllstände kontinuierlich überwacht werden. Damit wird auch vorteilhaft die Verfügbarkeit des Schienenfahrzeugs erhöht. Weiterhin muss die Überwachung des Füllstands der Wischwasserbehälter nicht mehr durch Personal erfolgen. Auf diese Weise wird die Zeit für das Nachschauen eingespart.

Das erfindungsgemäße Schienenfahrzeug weist eine Scheibenwischeranlage mit einem Wischwasserbehälter und eine erfindungsgemäße Wischwasserfüllstandsüberwachungseinrichtung auf. Das erfindungsgemäße Schienenfahrzeug teilt die Vorteile der erfindungsgemäßen Wischwasserfüllstandsüberwachungseinrichtung.

Die landseitige Wischwasserfüllstandsanzeigeeinrichtung weist eine landseitige Datenempfangseinrichtung zum drahtlosen Empfangen von Sensordaten von einer Datenübertragungseinheit eines Schienenfahrzeugs auf.

Die landseitige Wischwasserfüllstandsanzeigeeinrichtung weist außerdem eine landseitige Datenanzeigeeinrichtung zur Anzeige von Füllstandsdaten, welche einen Wischwasserbehälter des Schienenfahrzeugs betreffen bzw. den Füllstand eines Wischwasserbehälters angeben, auf Basis der empfangenen Sensordaten, auf. Vorteilhaft kann die Überwachung der Füllstände direkt von einer landseitigen zentralen Überwachungseinrichtung erfolgen, so dass sich das Personal des Schienenfahrzeugs selbst darum nicht zu kümmern braucht. Das Schienenfahrzeug erhält bei einem ermittelten niedrigen Füllstand eine Meldung, dass das Schienenfahrzeug bei nächster Gelegenheit eine Wartung benötigt, folgt dieser Meldung und der Zugführer braucht sich ansonsten um die Überwachung des Füllstands nicht zu kümmern. Durch die landseitige Überwachung des Füllstands kann auch der Einsatz eines ganzen Schienenfahrzeugparks besser geplant werden, da die Informationen zentral zusammenlaufen und so auch eine Disposition der vorhandenen Schienenfahrzeuge in Abhängigkeit von dem jeweiligen aktuellen Füllstand von deren Wischwasserbehältern zentral geplant werden kann.

Das erfindungsgemäße System zur Simulation einer landseitigen virtuellen Füllstandsanzeige eines Schienenfahrzeugs weist eine erfindungsgemäße Wischwasserfüllstandsüberwachungseinrichtung und eine erfindungsgemäße landseitige Wischwasserfüllstandsanzeigeeinrichtung auf. Das erfindungsgemäße System kombiniert die Vorteile der erfindungsgemäßen Wischwasserfüllstandsüberwachungseinrichtung und der erfindungsgemäßen landseitigen Wischwasserfüllstandsanzeigeeinrichtung.

Bei dem erfindungsgemäßen Verfahren zum Detektieren und Übermitteln eines Füllstands eines Wischwasserbehälters eines Schienenfahrzeugs erfolgt ein fahrzeugseitiges Detektieren von Sensordaten durch einen Füllstandssensor, welcher im Inneren eines Wischwasserbehälters des Schienenfahrzeugs angeordnet ist.

Die Sensordaten werden ausgelesen und es erfolgt ein drahtloses Übertragen der Sensordaten an eine landseitige Datenempfangseinrichtung. Das erfindungsgemäße Verfahren zum Detektieren und Übermitteln eines Füllstands eines Wischwasserbehälters eines Schienenfahrzeugs teilt die Vorteile der erfindungsgemäßen Wischwasserfüllstandsüberwachungseinrichtung.

Bei dem erfindungsgemäßen Verfahren zum Generieren einer virtuellen Füllstandsanzeige erfolgt ein landseitiges drahtloses Empfangen von Sensordaten von einer Datenübertragungseinheit eines Schienenfahrzeugs.

Schließlich erfolgt ein landseitiges Anzeigen von Füllstandsdaten, welche den Füllstand eines Wischwasserbehälters des Schienenfahrzeugs betreffen, auf Basis der empfangenen Sensordaten. Das erfindungsgemäße Verfahren zum Generieren einer virtuellen Füllstandsanzeige teilt die Vorteile der landseitigen Wischwasserfüllstandsanzeigeeinrichtung.

Bei dem erfindungsgemäßen Verfahren zum Überwachen eines Füllstands eines Wischwasserbehälters eines Schienenfahrzeugs wird das erfindungsgemäße Verfahren zum Detektieren und Übermitteln eines Füllstands eines Wischwasserbehälters eines Schienenfahrzeugs und nachfolgend das erfindungsgemäße Verfahren zum Generieren einer virtuellen Füllstandsanzeige ausgeführt.

Das erfindungsgemäße Schienenfahrzeug weist ein zentrales Datenbussystem, welches zur Übertragung von Daten, welche den Zustand technischer Einrichtungen des Schienenfahrzeugs kennzeichnen, eingerichtet ist, auf. Das zentrale Datenbussystem weist vorzugsweise einen Feldbus auf, welcher für eine Datenkommunikation zwischen einer Fahrzeugsteuerung und Sensoren und Stellgliedern sowie Kommunikationseinrichtungen ausgelegt ist.

Teil des erfindungsgemäßen Schienenfahrzeugs ist auch eine Führerstandsanzeige, welche dazu eingerichtet ist, aktuelle technische Informationen über den Betriebszustand des Schienenfahrzeugs in Form von Anzeigedaten auf Basis der von dem zentralen Datenbussystem übertragenen Daten bildlich darzustellen. Das erfindungsgemäße Schienenfahrzeug teilt die im Zusammenhang mit der erfindungsgemäßen Wischwasserfüllstandsanzeigeeinrichtung bereits genannten Vorteile.

Ein Teil der zuvor genannten Komponenten der erfindungsgemäßen Wischwasserfüllstandsüberwachungseinrichtung, der landseitigen Wischwasserfüllstandsanzeigeeinrichtung und des erfindungsgemäßen Systems zur Simulation einer landseitigen virtuellen Füllstandsanzeige eines Schienenfahrzeugs kann ganz oder teilweise in Form von Softwaremodulen in einem Prozessor eines entsprechenden Rechensystems realisiert werden, z.B. von einer Steuereinheit oder einem bereits vorhandenen Rechensystem eines Schienenfahrzeugs und/oder einem Rechensystem in einer landseitigen Überwachungseinrichtung oder Wartungseinrichtung. Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten.

Insofern wird die Aufgabe auch durch ein entsprechendes Computerprogrammprodukt mit einem Computerprogramm gelöst, welches direkt in ein Rechensystem eines Schienenfahrzeugs oder ein Rechensystem in einer landseitigen Überwachungseinrichtung oder Wartungseinrichtung ladbar ist, mit Programmabschnitten, um die Schritte des erfindungsgemäßen Verfahrens zum Detektieren und Übermitteln eines Füllstands eines Wischwasserbehälters eines Schienenfahrzeugs, zum Generieren einer virtuellen Füllstandsanzeige und zum Überwachen eines Füllstands eines Wischwasserbehälters eines Schienenfahrzeugs auszuführen, wenn das Programm in dem Rechensystem ausgeführt wird.

Ein solches Computerprogrammprodukt kann neben dem Computerprogramm gegebenenfalls zusätzliche Bestandteile, wie z. B. eine Dokumentation, und/oder zusätzliche Komponenten, auch Hardware-Komponenten, wie z.B. Hardware-Schlüssel (Dongles etc.) zur Nutzung der Software, umfassen.

Zum Transport zum Rechensystem und/oder zur Speicherung an oder in dem Rechensystem kann ein computerlesbares Medium, z.B. ein Memorystick, eine Festplatte oder ein sonstiger transportabler oder fest eingebauter Datenträger dienen, auf welchem die von einem Rechensystem einlesbaren und ausführbaren Programmabschnitte des Computerprogramms gespeichert sind. Das Rechensystem kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer bevorzugten Variante der erfindungsgemäßen Wischwasserfüllstandsüberwachungseinrichtung umfasst die Datenausleseeinheit eine interne Datenübertragungseinheit mindestens eines der folgenden Typen:
- ein zentrales Datenbussystem, welches zur Übertragung von Daten, welche den Zustand technischer Einrichtungen des Schienenfahrzeugs kennzeichnen, eingerichtet ist,
- ein Ethernet-System,
- eine interne drahtlose Datenübertragungseinheit,
- eine Kombination aus einer Sensorbox und einem Switch.

Das zentrale Datenbussystem dient der internen Datenübermittlung in einem Schienenfahrzeug und wird vorteilhaft auch zur internen Übertragung der Füllstandssensordaten verwendet. Ebenfalls bevorzugt weist das zentrale Datenbussystem des Schienenfahrzeugs ein Multifunktionsfahrzeugbussystem auf.

Ein Ethernetsystem kann insbesondere zur Übertragung von Daten zwischen den beweglichen Drehgestellen und dem Wagenkasten genutzt werden. Die drahtlose Datenübertragung kann auch innerhalb des Wagenkastens erfolgen, insbesondere zwischen einem Switch und einer RDA-Box.

Ganz besonders bevorzugt weist die Datenausleseeinheit der erfindungsgemäßen Wischwasserfüllstandsüberwachungseinrichtung eine RDA-Box auf. Eine solche RDA-Box weist eine Ausleseeinheit mit einer Software zum Erkennen und Auslesen sowie drahtlosen Übermitteln der für die Wiedergabe des aktuellen technischen Zustands des Schienenfahrzeugs relevanten Daten auf. Vorteilhaft kann diese Art der Ausleseeinheit, welche insbesondere für das Auslesen von Daten eines zentralen Datenbussystems eines Schienenfahrzeugs geeignet ist, auch für das Auslesen und die Datenübertragung von Füllstandsdaten genutzt werden, ohne dass zusätzliche Komponenten integriert werden müssen.

Umfasst die fahrzeugseitige Datenausleseeinheit ein zentrales Bussystem, so weist die fahrzeugseitige Datenausleseeinheit der erfindungsgemäßen Wischwasserfüllstandsüberwachungseinrichtung eine an eine Echtzeitermittlung der relevanten Daten in dem zentralen Datenbussystem des Schienenfahrzeugs angepasste Auslesefrequenz auf bzw. wird deren Ausleseprozess mit einer derart angepassten Auslesefrequenz betrieben. Vorteilhaft werden die relevanten Daten aus dem zentralen Datenbussystem mit einer ausreichend hohen Auslesefrequenz gelesen, um eine landseitige virtuelle Datenanzeige ohne größere Verzögerung, also nahezu in Echtzeit, simulieren zu können. Vorteilhaft können echtzeitabhängige Reaktionen auf einen aktuellen Betriebszustand eines Schienenfahrzeugs von der Landseite aus erfolgen. Insbesondere ist es vorteilhaft, wenn die Auslesefrequenz mit der Taktung des zentralen Datenbussystems synchronisiert ist, um einen teilweise Datenverlust bei dem Ausleseprozess zu vermeiden.

Besonders bevorzugt weist das zentrale Datenbussystem des erfindungsgemäßen Schienenfahrzeugs ein Multifunktionsfahrzeugbussystem auf. Ein Multifunktionsfahrzeugbus, im Englischen mit "Multifunction Vehicle Bus" bezeichnet und mit "MVB" abgekürzt, um fasst einen Feldbus zur Datenkommunikation innerhalb eines Schienenfahrzeugs. Der MVB verbindet die wichtigsten Komponenten der Leittechnik eines Schienenfahrzeugs miteinander. Diese umfassen die Antriebssteuerung, die Zugsicherung, Führerstandsanzeigen, zentrale Steuergeräte, dezentrale Ein-/Ausgaben, Türsteuerungen, Klimaanlagen, Hilfsbetriebeumrichter und Recorder.

Der MVB wird meist als ein Teil eines Zug-Kommunikationsnetzwerks, im Englischen mit "Train Communication Network" bezeichnet und mit "TCN" abgekürzt, eingesetzt. Ein solcher Multifunktionsfahrzeugbus liefert ein fahrzeugseitiges Diagnosesystem. Der MVB ist ein echter Datenbus mit einem Master und mehreren Slaves. Es können also mehrere Busanschaltungen an eine Leitung angeschlossen werden. Zu einem Zeitpunkt darf nur eine dieser Anschaltungen Daten senden. Der MVB-Master gibt mit seinem Master-Frame den Timeslot vor. Der Slave sendet daraufhin seinen Slave-Frame, dies ist vergleichbar mit einem CAN-RTR-Verfahren (CAN = Controller Area Network, ein serielles Feldbussystem, RTR = remote transmission request, zu Deutsch: Anfrage zur Fernübermittlung von Daten, mit Hilfe eines Remote-Frames kann ein Teilnehmer einen anderen auffordern, seine Daten zu senden). Wie auch bei FlexRay (FlexRay ist ein serielles deterministisches und fehlertolerantes Feldbussystem für den Einsatz im Automobil) muss das Betriebssystem wie auch die Applikation zum MVB-Bus synchron sein. Ist das nicht Fall, kommt es auch bei einem Oversampling zu einem Datenverlust, da MVB-Cluster und CPU driften. Mithin ist es auch vorteilhaft bzw. notwendig, das Auslesen der relevanten Daten für die landseitige Füllstandsanzeige mit der Taktung des MVBs zu synchronisieren. CPU und MVB-Master-Controller haben eigene Taktversorgungen. Echtzeit-Betriebssysteme nach dem AUTOSAR-Standard (AUTOSAR = Automotive Open System Architecture, zu Deutsch: in der Automobilindustrie genutzte offene Systemarchitektur) verfügen über solche Synchronisierungs-Mechanismen. Die Daten werden dann von allen anderen angeschlossenen Einheiten empfangen. Die Daten werden in einem synchronen Zeitmultiplex-Verfahren gesendet. Die Signalpegel auf der Leitung sind RS484-Pegel.

Ebenfalls bevorzugt weist die fahrzeugseitige Datenausleseeinrichtung der erfindungsgemäßen Wischwasserfüllstandsüberwachungseinrichtung eine Ausleseeinheit mit einer Software zum Erkennen und Auslesen sowie drahtlosen Übermitteln der für die Wiedergabe den aktuellen technischen Zustand des Schienenfahrzeugs relevanten Daten auf. Die Ausleseeinheit ebenso wie die fahrzeugseitige Datenausleseeinrichtung sind bevorzugt Teil einer sogenannten RDA-Box (RDA = Remote Data Access, zu Deutsch: Datenfernzugriff, beispielsweise auf Fahrzeuge oder Anlagen), welche auch eine RDA-Software aufweist. Eine solche RDA-Software befindet sich auf einer SD-Karte der RDA-Box. Die RDA-Software speichert Informationen zu Abtastraten, Übertragungseinheiten je Prozessdaten, Diagnosedaten, Ereignismeldungen und Umfelddaten. Insbesondere umfasst die RDA-Software Informationen darüber, wie die RDA-Box die relevanten Daten des zentralen Datenbusses des Schienenfahrzeugs und in welchem zeitlichen Abstand auf die Landseite übertragen soll.

Ein RDA-RT (RDA-Train Router: zu Deutsch: RDA-Netzwerkgerät für ein Schienenfahrzeug) weist einen universellen Onboard-Rechner auf und bietet eine Vielzahl von Schnittstellen zur Datenerfassung und verschiedenste wireless Interfaces für die Landkommunikation. Alternativ wird auch eine SD-Card und USB unterstützt. Somit ist der RDA-RT bestens geeignet für eine DFÜ-Verbindung zwischen einem Schienenfahrzeug und einem landseitigen Server (DFÜ = Datenfernübertragung). Seine unterschiedlichen internen Speichermedien erlauben den Einsatz als Datenspeicher. Zur Kommunikation mit der Fahrzeugseite bietet der RDA-RT sowohl Trafo- als auch Optokopplung, CAN-Bus, Ethernet und diskrete Schnittstellen.

Alle elektronischen Komponenten des RDA-RT sind in einem IP50-Gehäuse (IP50: Schutzgrad für Betriebsmittel: Staubschutzgehäuse) integriert. Sie befinden sich an der Unterseite des Gehäuses und sind steckbar ausgeführt und durch Verschrauben fixierbar oder einrastend, mit Ausnahme des USB-Steckers.

Vorteilhaft werden die ausgelesenen Daten landseitig in standardisierte Anzeigedaten einer Füllstandsanzeige gewandelt, die für jeden Fahrzeugführer oder jeden mit einer Wartung eines Schienenfahrzeugs betrauten Techniker leicht verständlich sind. Mithin wird eine landseitige Einflussnahme auf den Betrieb eines Schienenfahrzeugs erleichtert.

Die Erfindung wird im Folgenden unter Hinweis auf die beigefügten Figuren anhand von Ausführungsbeispielen noch einmal näher erläutert. Es zeigen:
FIG 1 eine schematische Darstellung eines Schaltdiagramms eines Bussystems eines Schienenfahrzeugs,
FIG 2 eine schematische Darstellung einer landseitigen Anzeige des Füllstands von zwei Wischwasserbehältern,
FIG 3 eine schematische Darstellung einer Wischwasserfüllstandsüberwachungseinrichtung für ein Schienenfahrzeug gemäß einem Ausführungsbeispiel der Erfindung,
FIG 4 eine schematische Darstellung einer landseitigen Wischwasserfüllstandsanzeigeeinrichtung gemäß einem Ausführungsbeispiel der Erfindung,
FIG 5 eine schematische Darstellung eines Systems zur Simulation einer landseitigen virtuellen Füllstandsanzeige eines Schienenfahrzeugs gemäß einem Ausführungsbeispiel der Erfindung,
FIG 6 ein Flussdiagramm, welches ein Verfahren zum Detektieren und Übermitteln eines Füllstands eines Wischwasserbehälters eines Schienenfahrzeugs gemäß einem Ausführungsbeispiel der Erfindung veranschaulicht,
FIG 7 ein Flussdiagramm, welches ein Verfahren zum Generieren einer virtuellen Füllstandsanzeige gemäß einem Ausführungsbeispiel der Erfindung veranschaulicht,
FIG 8 ein Flussdiagramm, welches ein Verfahren zum Überwachen eines Füllstands eines Wischwasserbehälters eines Schienenfahrzeugs gemäß einem Ausführungsbeispiel der Erfindung veranschaulicht.

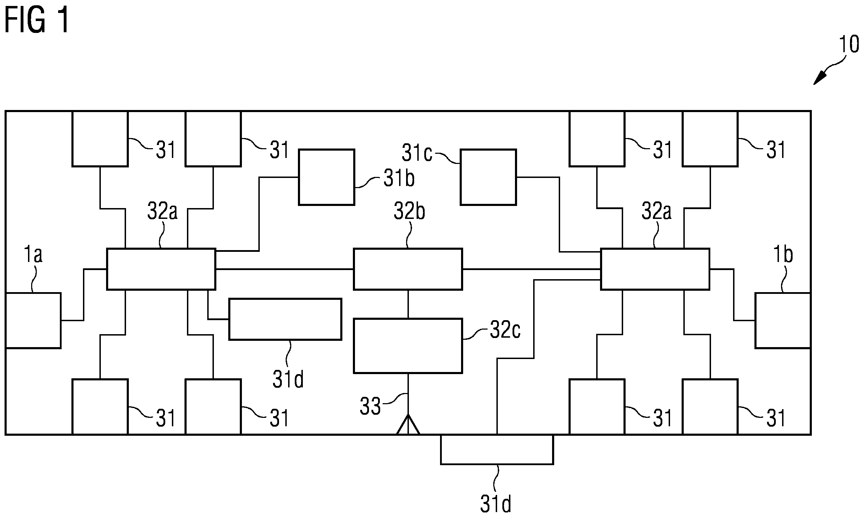

In FIG 1 ist eine schematische Darstellung 10 eines Schaltdiagramms eines Bussystems eines Schienenfahrzeugs gezeigt. Das Bussystem weist eine Vielzahl von Sensoren 31, 1a, 1b, 31b, 31c, 31d auf. Die Sensoren 31, 1a, 1b, 31b, 31c, 31d umfassen unter anderem Sensoren 31 für die Messung des Füllstands von Streumittel in einem Streumittelbehälter einer Sandungsanlage. Weiterhin umfassen die Sensoren Füllstandssensoren 1a, 1b für die Messung des Füllstands von Wischwasserbehältern, wobei ein erster Sensor 1a den Füllstand des Wischwasserbehälters im Frontbereich des Schienenfahrzeugs detektiert und ein zweiter Sensor 1b den Füllstand des Wischwasserbehälters auf der Rückseite des Schienenfahrzeugs detektiert. Zudem gibt es Sensoren 31b zur Messung der Luftfeuchtigkeit, Sensoren 31c zur Messung des Batterieladezustands und Sensoren 31d zur Messung der Innentemperatur und Innenfeuchtigkeit. Teil des Bussystems sind jeweils eine Sensorbox 32a für einen vorderen Abschnitt und einen hinteren Abschnitt des Schienenfahrzeugs, ein gemeinsamer Switch 32b, welcher mit den beiden Sensorboxen 32a über Ethernet verbunden ist, sowie eine RDA-Box 32c, welche mit dem sogenannten MVB-Bus des Schienenfahrzeugs verbunden ist. An die RDA-Box ist eine Funkantenne 33 als Datenübertragungseinheit angeschlossen. Die Sensorboxen 32a, 32b sowie der Switch 32b als auch die RDA-Box sind Teil des MVB-Busses bzw. mit ihm verbunden.

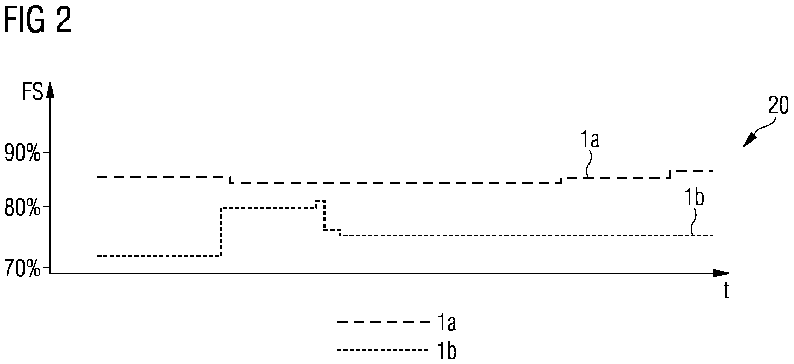

In FIG 2 ist eine schematische Darstellung 20 einer landseitigen Anzeige des Füllstands von zwei Füllstandssensoren 1a, 1b von zwei Wischwasserbehältern im vorderen Abschnitt und im hinteren Abschnitt eines Schienenfahrzeugs gezeigt. Wie in FIG 2 zu erkennen ist, schwanken die Füllstände der Wischwasserbehälter erheblich. Insbesondere der Füllstand des hinteren Wischwasserbehälters schwankt zwischen 70 und 90 Prozent des Maximalfüllstands.

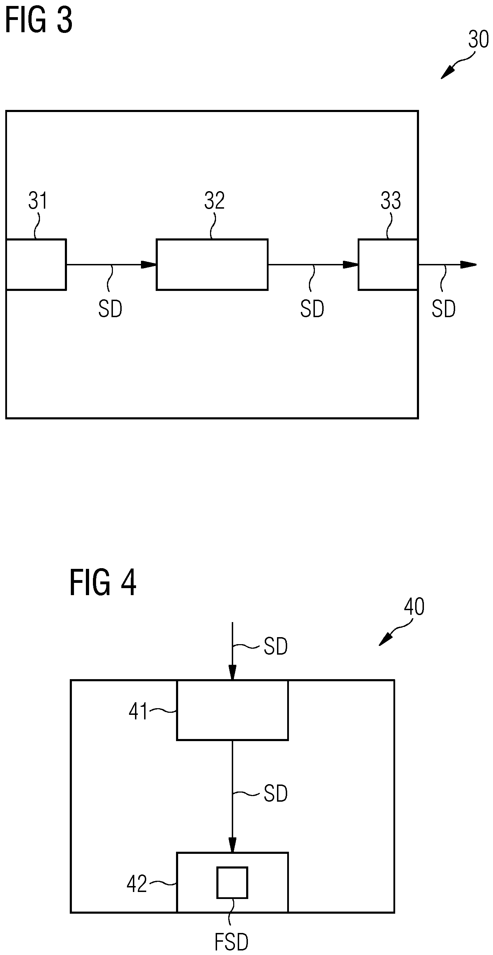

In FIG 3 ist eine schematische Darstellung einer Wischwasserfüllstandsüberwachungseinrichtung 30 für ein Schienenfahrzeug gezeigt. Die Wischwasserfüllstandsüberwachungseinrichtung 30 weist einen fahrzeugseitigen Füllstandssensor 31 auf, welcher im Inneren eines Wischwasserbehälters des Schienenfahrzeugs angeordnet ist, zum Erfassen von Sensordaten SD.

Teil der Wischwasserfüllstandsüberwachungseinrichtung 30 ist auch eine Datenausleseeinheit 32 zum Auslesen der Sensordaten SD.

Die Wischwasserfüllstandsüberwachungseinrichtung 30 umfasst auch eine Datenübertragungseinheit 33 zum drahtlosen Übertragen der Sensordaten SD an eine landseitige Datenempfangseinrichtung.

In FIG 4 ist eine schematische Darstellung einer landseitigen Wischwasserfüllstandsanzeigeeinrichtung 40 gezeigt. Die Wischwasserfüllstandsanzeigeeinrichtung 40 umfasst eine landseitige Datenempfangseinrichtung 41 zum drahtlosen Empfangen von Sensordaten SD von einer Datenübertragungseinheit eines Schienenfahrzeugs und eine landseitige Datenanzeigeeinrichtung 42 zur Anzeige von Füllstandsdaten FSD, welche einen Wischwasserbehälter des Schienenfahrzeugs betreffen, auf Basis der empfangenen Sensordaten SD.

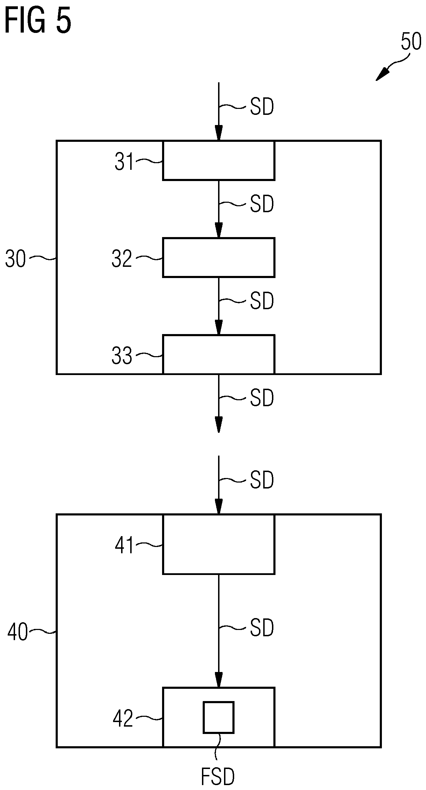

In FIG 5 ist eine schematische Darstellung eines Systems 50 zur Simulation einer landseitigen virtuellen Füllstandsanzeige FSD eines Schienenfahrzeugs gezeigt. Das System umfasst die in FIG 3 gezeigte Wischwasserfüllstandsüberwachungseinrichtung 30 sowie die in FIG 4 gezeigte landseitige Wischwasserfüllstandsanzeigeeinrichtung 40.

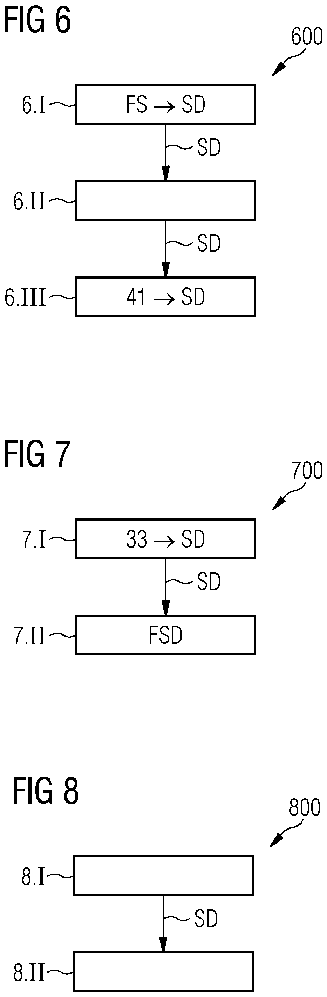

In FIG 6 ist ein Flussdiagramm 600 gezeigt, welches ein Verfahren zum Detektieren und Übermitteln eines Füllstands eines Wischwasserbehälters eines Schienenfahrzeugs gemäß einem Ausführungsbeispiel der Erfindung veranschaulicht.

Bei dem Schritt 6.1 erfolgt ein fahrzeugseitiges Detektieren von Sensordaten SD durch einen Füllstandssensor, welcher im Inneren eines Wischwasserbehälters des Schienenfahrzeugs angeordnet ist. Die Sensordaten SD geben Auskunft über den aktuellen Füllstand FS des Wischwasserbehälters.

Bei dem Schritt 6.II werden Sensordaten SD aus dem Füllstandssensor ausgelesen.

Bei dem Schritt 6.III erfolgt ein drahtloses Übertragen der Sensordaten SD an eine landseitige Datenempfangseinrichtung 41.

In FIG 7 ist ein Flussdiagramm 700 gezeigt, welches ein Verfahren zum Generieren einer virtuellen Füllstandsanzeige veranschaulicht.

Bei dem Schritt 7.I erfolgt ein landseitiges drahtloses Empfangen von Sensordaten SD von einer Datenübertragungseinheit 33 eines Schienenfahrzeugs.

Bei dem Schritt 7.II erfolgt ein landseitiges Anzeigen von Füllstandsdaten FSD, welche einen Wischwasserbehälter des Schienenfahrzeugs betreffen, auf Basis der empfangenen Sensordaten SD.

In FIG 8 ist ein Flussdiagramm 800 gezeigt, welches ein Verfahren zum Überwachen eines Füllstands eines Wischwasserbehälters eines Schienenfahrzeugs gemäß einem Ausführungsbeispiel der Erfindung veranschaulicht.

Bei dem Schritt 8.1 wird das in FIG 6 veranschaulichte Verfahren zum Detektieren und Übermitteln eines Füllstands eines Wischwasserbehälters eines Schienenfahrzeugs gemäß einem Ausführungsbeispiel der Erfindung durchgeführt. Bei dem Schritt 8.II wird das in FIG 7 veranschaulichte Verfahren zum Generieren einer virtuellen Füllstandsanzeige durchgeführt.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. Unabhängig vom grammatikalischen Geschlecht eines bestimmten Begriffes sind Personen mit männlicher, weiblicher oder anderer Geschlechteridentität mit umfasst.

## Patentansprüche

1. Wischwasserfüllstandsüberwachungseinrichtung (30) für ein Schienenfahrzeug, aufweisend:
- einen fahrzeugseitigen Füllstandssensor (1a, 1b), welcher an oder in einem Wischwasserbehälter (1) des Schienenfahrzeugs angeordnet ist, zum Erfassen von Sensordaten (SD),
- eine Datenausleseeinheit (32) zum Auslesen der Sensordaten (SD),
- eine Datenübertragungseinheit (33) zum drahtlosen Übertragen der Sensordaten (SD) an eine landseitige Datenempfangseinrichtung (41).

2. Wischwasserfüllstandsüberwachungseinrichtung (30) nach Anspruch 1, wobei die Datenausleseeinheit (32) eine interne Datenübertragungseinheit (32a, 32b, 32c) mindestens eines der folgenden Typen umfasst:
- ein zentrales Datenbussystem, welches zur Übertragung von Daten, welche den Zustand technischer Einrichtungen des Schienenfahrzeugs kennzeichnen, eingerichtet ist,
- ein Ethernet-System,
- eine interne drahtlose Datenübertragungseinheit,
- eine Kombination aus einer Sensorbox und einem Switch.

3. Wischwasserfüllstandsüberwachungseinrichtung (30) nach Anspruch 2, wobei das zentrale Datenbussystem des Schienenfahrzeugs ein Multifunktionsfahrzeugbussystem aufweist.

4. Wischwasserfüllstandsüberwachungseinrichtung (30) nach einem der vorstehenden Ansprüche, wobei die Datenausleseeinheit (32) eine RDA-Box umfasst.

5. Schienenfahrzeug, aufweisend:
- einen Wischwasserbehälter (1),
- eine Wischwasserfüllstandsüberwachungseinrichtung (30) nach einem der vorstehenden Ansprüche.

6. Landseitige Wischwasserfüllstandsanzeigeeinrichtung (40), aufweisend:
- eine landseitige Datenempfangseinrichtung (41) zum drahtlosen Empfangen von Sensordaten (SD) von einer Datenübertragungseinheit (33) eines Schienenfahrzeugs,
- eine landseitige Datenanzeigeeinrichtung (42) zur Anzeige von Füllstandsdaten (FSD), welche einen Wischwasserbehälter (1) des Schienenfahrzeugs betreffen, auf Basis der empfangenen Sensordaten (SD).

7. System (70) zur Simulation einer landseitigen virtuellen Füllstandsanzeige (FSD) eines Schienenfahrzeugs, aufweisend:
- eine Wischwasserfüllstandsüberwachungseinrichtung (30) nach einem der Ansprüche 1 bis 4,
- eine landseitige Wischwasserfüllstandsanzeigeeinrichtung (40) nach Anspruch 6.

8. Verfahren zum Detektieren und Übermitteln eines Füllstands eines Wischwasserbehälters (1) eines Schienenfahrzeugs, aufweisend die Schritte:
- fahrzeugseitiges Detektieren von Sensordaten (SD) durch einen Füllstandssensor (1a, 1b), welcher an oder in einem Wischwasserbehälter (1) des Schienenfahrzeugs angeordnet ist,
- Auslesen der Sensordaten (SD),
- drahtloses Übertragen der Sensordaten (SD) an eine landseitige Datenempfangseinrichtung (41).

9. Verfahren zum Generieren einer virtuellen Füllstandsanzeige, aufweisend die Schritte:
- landseitiges drahtloses Empfangen von Sensordaten (SD) von einer Datenübertragungseinheit (33) eines Schienenfahrzeugs,
- landseitiges Anzeigen von Füllstandsdaten (FSD), welche einen Wischwasserbehälter (1) des Schienenfahrzeugs betreffen, auf Basis der empfangenen Sensordaten (SD).

10. Verfahren zum Überwachen eines Füllstands eines Wischwasserbehälters (1) eines Schienenfahrzeugs, aufweisend die Schritte:
- Durchführen des Verfahrens nach Anspruch 8,
- Durchführen des Verfahrens nach Anspruch 9.

11. Computerprogrammprodukt mit einem Computerprogramm, welches direkt in eine Speichereinheit eines Rechensystems eines Schienenfahrzeugs oder eines Rechensystems einer landseitigen Wischwasserfüllstandsanzeigeeinrichtung (40) ladbar ist, mit Programmabschnitten, um ein Verfahren nach einem der Ansprüche 8 bis 10 auszuführen, wenn das Computerprogramm in dem Rechensystem ausgeführt wird.

12. Computerlesbares Medium, auf welchem von einer Rechnereinheit ausführbare Programmabschnitte gespeichert sind, um ein Verfahren nach einem der Ansprüche 8 bis 10 auszuführen, wenn die Programmabschnitte von der Rechnereinheit ausgeführt werden.
